(19) Europäisches Patentamt
European Patent Office
Office européen des brevets

(11) **EP 2 166 803 A1**

(12) **EUROPEAN PATENT APPLICATION**

(43) Date of publication:
**24.03.2010 Bulletin 2010/12**

(51) Int Cl.:
***H04W 72/04*** *(2009.01)* *H04W 72/12* *(2009.01)*

(21) Application number: **09169896.9**

(22) Date of filing: **10.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.09.2008 CN 200810216305**

(71) Applicant: **Huawei Technologies Co., Ltd.**
**Longgang District**
**Shenzhen**
**Guangdong 518129 (CN)**

(72) Inventors:
- **Li, Bo**
  **518129, Shenzhen (CN)**
- **Chen, Yuhua**
  **518129, Shenzhen (CN)**

(74) Representative: **Körber, Martin Hans**
**Mitscherlich & Partner**
**Patent- und Rechtsanwälte**
**Sonnenstraße 33**
**80331 München (DE)**

# (54) Method and system for scheduling resource

(57) Embodiments of the present invention provide a method for scheduling resource, a base station and a communication system. The method for scheduling resource includes: determining, when there is a real time service to be transmitted, reserved processes for an uplink semi-persistent scheduling if it is judged that processes need to be reserved for the real time service; transmitting to a user equipment a notification message including information on the reserved processes; instructing the user equipment to transmit data packets on uplink subframes corresponding to the reserved processes. With the resource scheduling method provided in embodiments of the present invention, signaling transmission is decreased and signaling overhead is reduced, and by reserving multiple processes for the uplink semi-persistent scheduling for service transmission, the collision problem with the uplink semi-persistent scheduling in the prior art may be well solved, system performance is dramatically improved and users' service experience is improved.

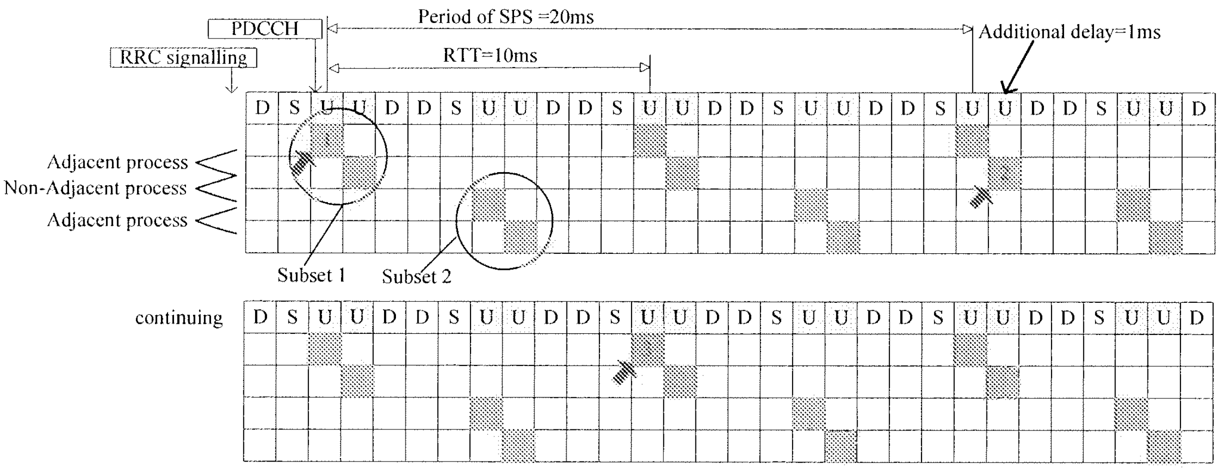


**Fig. 4**

EP 2 166 803 A1

Printed by Jouve, 75001 PARIS (FR)

## Description

### Technical Field

The present invention relates to communication technology, and particularly to a method, a base station and a communication system for scheduling resource.

### Background

Compared with the current third generation mobile communication system, the 3GPP long term evolution (LTE) system is based on packet switch (PS) in structure. In addition, as the common long term evolution of Wideband Code Division Multiple Access (WCDMA) and Time Division-Synchronous Code Division Multiple Access (TD-SCDMA), it maintains duplex modes of Frequency Division Duplex (FDD) and Time Division Duplex (TDD). Uplink and downlink of the TDD mode occupy different uplink and downlink subframes on a same frequency band. To accommodate different traffics of uplink and downlink more flexibly, uplink and downlink allocation of subframes is configurable in the TDD mode. At present, the standard supports seven different subframe allocation types, and subframe uplink and downlink, process number of corresponding uplink synchronous hybrid automatic retransmission request (HARQ) and HARQ round trip time (RTT) as configured are shown in the following Table 1. As can be seen, HARQ RTTs of all the subframe allocation types except for subframe allocations types 0 and 6 are 10 ms.

Table 1

| UL/DL allocation | Periodicity | Subframe number | | | | | | | | | | Process Number | RTT |
|---|---|---|---|---|---|---|---|---|---|---|---|---|---|
| | | 0 | 1 | 2 | 3 | 4 | 5 | 6 | 7 | 8 | 9 | | |
| 0 | 5 ms | D | S | U | U | U | D | S | U | U | U | 7 | 11.67ms |
| 1 | 5 ms | D | S | U | U | D | D | S | U | U | D | 4 | 10ms |
| 2 | 5 ms | D | S | U | D | D | D | S | U | D | D | 2 | 10ms |
| 3 | 10 ms | D | S | U | U | U | D | D | D | D | D | 3 | 10ms |
| 4 | 10 ms | D | S | U | U | D | D | D | D | D | D | 2 | 10ms |
| 5 | 10 ms | D | S | U | D | D | D | D | D | D | D | 1 | 10ms |
| 6 | 10 ms | D | S | U | U | U | D | S | U | U | D | 6 | 12ms |
| Note: in this table, U represents uplink and D represents downlink. | | | | | | | | | | | | | |

Voice service is a heavyweight service for mobile communication. On the one hand, the service itself has a feature of periodic data arrival interval after source encoding; on the other hand, the service is very sensitive to delay and jitter and hence source data packets need to be transmitted timely, therefore in mobile communication systems heretofore, permanent connection of circuit switching is most utilized to meet quality of service (QoS) requirements of this kind of real time services. To ensure the characteristic of voice service's sensitivity to time delay, a maximum transmission delay is provided. When the retransmission time of a voice service data packet reaches the maximum transmission delay and the data packet is not received correctly, it is discarded.

The whole architecture of 3GPP LTE system is based on packet switching. When supporting real time services such as Voice over IP (VoIP), the quality of service of real time services should be guaranteed by system design and strict QoS mechanism by means of features of the real time services.

For the current LTE system, to improve system reliability and effectiveness as a whole, a mechanism of dynamic scheduling and HARQ is used on the wireless interface to accomplish resource scheduling, sharing and correct transmission of data. For uplink transmission of the LTE system in the TDD mode, an HARQ mechanism in a halt-and-wait mode is used. That is, a plurality of HARQ processes are used for parallel processing data and initial transmission and retransmission of each data packet on each process is handled according to predetermined interval. An evolution base station eNB (evolution NodeB) transmits an uplink permission signaling on a physics downlink control channel (PDCCH). A user equipment (UE) transmits data packets on uplink shared resources according to the uplink permission signaling. The eNB receives data packets and checks whether the data packets can be decoded correctly, and transmits positive or error feedback at predetermined times. According to the feedback, the eNB schedules the next retransmission or initial transmission. After one data packet is transmitted in every process, transmission of the next data packet or retransmission of this data packet is not allowed until the corresponding feedback is received.

To guarantee low delay and QoS requirements of jitter for the real time services such as VoIP and utilize periodic arrival interval of data packets of the real time services such as VoIP, the data packet scheduling algorithm is optimized and a semi-persistent scheduling (SPS) is introduced in the prior art. In the semi-persistent scheduling, when a real time service such as VoIP just enters speech phase, the UE is instructed by the uplink permission signaling on the PDCCH to transmit uplink data and it is instructed that the same uplink resources as these are reserved for the UE in subsequent periods for transmitting new data. This semi-persistent scheduling on the one hand satisfies QoS requirements of the real time services and on the other hand decreases overhead for PDCCH signaling.

The inventor of the present invention finds that the above-mentioned prior art has the following technical defect. Due to the uplink uni-carrier characteristic of LTE system, i.e. the fact that the same UE cannot transmit more than one data packet in the same subframe, when the RTT of the synchronous HARQ process and a period of the semi-persistent scheduling of the real time service such as VoIP have an identical common multiple (e.g. 10 ms for RTT and 20 ms for period of SPS), retransmission of a data packet and initial transmission of the semi-persistent scheduling will occur at the same time, and collision occurs. This would result in severe deterioration of system performance and this problem becomes worse particularly in the TDD mode.

## Summary of the Invention

Embodiments of the present invention provide a method for scheduling resource, a base station and a communication system to solve the problem of collision due to simultaneous occurring of retransmission of a data packet and initial transmission with respect to the semi-persistent scheduling when the RTT of the synchronous HARQ process and a period of the semi-persistent scheduling have same common multiple.

A method for resource scheduling according to an embodiment of the present invention includes: determining, when there is a real time service to be transmitted, reserved processes for an uplink semi-persistent scheduling if processes need to be reserved for the real time service; transmitting to a user equipment a notification message including information on the reserved processes; and instructing the user equipment to transmit data packets on uplink subframe corresponding to the reserved processes.

A method for transmitting packets by a user equipment according to an embodiment of the present invention includes: receiving a notification message from a network, the notification message including information on reserved processes for an uplink semi-persistent scheduling determined by the network; receiving an instruction from the network; and transmitting, by the user equipment, data packets on uplink subframes corresponding to the reserved processes.

A base station according to an embodiment of the present invention includes: a judgment module configured to judge whether processes needs to be reserved for a real time service; a determination module configured to determine reserved processes for an uplink semi-persistent scheduling if the judgment module judges that processes need to be reserved; a communication module configured to transmit information on the reserved processes by the determination module to a user equipment and instruct the user equipment to transmit data packets on uplink subframes corresponding to the reserved processes.

A communication system according to an embodiment of the present invention includes a base station that is communicatively coupled with a user equipment; the base station is configured to determine at least two reserved processes for an uplink semi-persistent scheduling, transmit information on the reserved processes to the user equipment and instruct the user equipment to transmit data packets on uplink subframes corresponding to the reserved processes.

With the method for resource scheduling according to an embodiment of the present invention, signaling transmission is decreased and signaling overhead is reduced, and by reserving multiple processes for the uplink semi-persistent scheduling for service transmission, the collision problem with the uplink semi-persistent scheduling in the prior art may be well solved, system performance is dramatically improved and users' service experience is improved.

## Brief Description of Drawings

Fig. 1 is a flow chart of a method for resource scheduling according to an embodiment of the present invention;

Fig. 2 is a schematic diagram of a preferred method for determining the reserved processes for an uplink semi-persistent scheduling according to an embodiment of the present invention;

Fig. 3 is a schematic diagram of scheduling resources on the subframe allocation type 1 according to an embodiment of the present invention;

Fig. 4 is a schematic diagram of scheduling resources on the subframe allocation type 1 according to another embodiment of the present invention;

Fig. 5 is a schematic diagram of scheduling resources on the subframe allocation type 3 according to an embodiment of the present invention;

Fig. 6 is a schematic diagram of scheduling resources on the subframe allocation type 3 according to another embodiment of the present invention; and

Fig. 7 is an architecture diagram of a base station according to an embodiment of the present invention.

## Detail Description

To make objects, technical solutions and advantages of the present invention clearer, technical solutions according to embodiments of the present invention will be described in detail in conjunction with specific embodiments and accompanying drawings.

An embodiment of the present invention provides a method for resource scheduling for the semi-persistent scheduling of a real time service in the LTE system under the condition of uplink synchronous HARQ. In the present embodiment, when there is a real time service to be transmitted, if it is judged that processes need to be reserved for the real time service, the base station may determine reserved processes for the uplink semi-persistent scheduling, send a notification message including information on the reserved processes to a UE and instruct the UE to transmit data packets on uplink subframes corresponding to the reserved processes. If transmitting a data packet on a certain process of the reserved processes is not successful, the data packet may be retransmitted on uplink subframes corresponding to the RTT of the certain process.

Below, the method for resource scheduling according to an embodiment of the present invention will be described in detail by taking the real time service scheduling in the LTE system as an example; however, embodiments of the present invention are not limited to the LTE system.

As shown in Fig. 1, a method for resource scheduling is provided in an embodiment of the present invention. When there is a real time service to be transmitted, the method may include the following steps.

Step 100: An eNB may judge whether processes need to be reserved for the real time service.

In an embodiment of the present invention, when there is a real time service to be transmitted, the eNB may first judge whether processes need to be reserved for the real time service for transmission. If it is judged that processes need to be reserved for the real time service, the eNB may determine according to an RTT of a subframe allocation type and a period of the semi-persistent scheduling of the real time service whether there is a collision during the maximum transmission delay of the real time service. If it is determined that there is a collision, the eNB may judge that processes need to be reserved for the real time service and the procedure proceeds to step 101. If it is determined that there is no collision, the eNB may judge that no process needs to be reserved for the real time service and the procedure proceeds to step 104. Here, determining whether there is a collision may be comparing the least common multiple between the RTT of the subframe allocation type and the period of the semi-persistent scheduling of the real time service and the maximum transmission delay of the real time service. If the least common multiple between the RTT of the subframe allocation type and the period of the semi-persistent scheduling of the real time service is less than or equal to the maximum transmission delay of the real time service, it is determined that there is a collision. If the least common multiple between the RTT of the subframe allocation type and the period of the semi-persistent scheduling of the real time service is greater than the maximum transmission delay of the real time service, it is determined that there is no collision.

Step 101: The eNB may determine reserved processes for an uplink semi-persistent scheduling.

In an embodiment of the present invention, when there is a real time service to be transmitted, if it is judged that processes need to be reserved for the real time service, the eNB may reserve two processes as default or may reserve more than two processes according to the real time service. The eNB may randomly select two or more processes and reserve the selected processes for the uplink semi-persistent scheduling to transmit the real time service.

Step 102: The eNB may transmit a notification message including information on the reserved processes to a UE.

In an embodiment of the present invention, the notification message may be a signaling such as a radio resource control (RRC) signaling. That is, the eNB may transmit the information on the reserved processes to the UE via the signaling, e.g. transmit the information on the reserved processes to the UE via the RRC signaling. The eNB may also transmit the information on the reserved processes to the UE via other system signaling. In the present embodiment, the information on the reserved processes may be the number of processes, process numbers, process set, subframe numbers corresponding to the processes or subframe set corresponding to the processes or a multiple pattern mode, and may also be arbitrary two, more or all of the above-mentioned information.

In an embodiment of the present invention, when the information on the reserved processes is carried via the RRC signaling, the information may be represented by defining a specific bit in the RRC signaling. For example, Value "1" for the specific bit means that two processes are reserved by default and Value "0" for the specific bit means no process needs to be reserved. It is also possible that two or more specific bits in the RRC signaling are used to represent the information. When taking two specific bits as an example, value "11" may mean that two processes are reserved, value "10" may mean that two processes are reserved and value "00" may mean no process is reserved. In the present embodiment, the information on the reserved processes ma y also be carried via the RRC signaling in other modes. For example, it is also possible that a cell is defined in the RRC signaling for representing the information on the reserved processes. If there is no the defined cell in the distributed RRC signaling, it may mean that no reserved process is needed for this transmission of the real time service. If the defined cell is included in the distributed RRC signaling, value of the cell represents reservation of different processes. For example, different values of the cell may represent the different number of reserved processes, as well as different reserved process set. It is also possible that a cell is defined in the RRC signaling for representing whether it is a multiple pattern mode. Value "1" for the cell may represent that this transmission of the real time service uses the multiple pattern mode.

Step 103: The eNB may instruct the UE to transmit data packets on uplink subframes corresponding to the reserved processes.

In embodiments of the present invention, the eNB may instruct via the PDCCH signaling the UE to transmit data packets on uplink subframes corresponding to the reserved processes. Preferably, the eNB may instruct, via the PDCCH signaling, the UE about the uplink subframe corresponding to the process that should be used for the transmission of the first data packet. The process that should be used for the transmission of the first data packet is any one of the reserved processes.

In an embodiment of the present invention, the UE may receive the information on the reserved processes transmitted to the UE by the eNB, receive the instruction transmitted to the UE by the eNB and transmit data packets on the uplink subframes corresponding to the reserved processes. For example, it is possible to start transmitting a data packet from a corresponding uplink subframe according to the uplink subframe corresponding to the process that should be used for the transmission of the first data packet instructed by the eNB. Preferably, the UE may use the uplink subframes corresponding to the reserved processes to transmit data packets in a sequential and cycling mode. In an embodiment of the present invention, the UE may also transmit data packets on the uplink subframes corresponding to the reserved processes in other modes. For example, the uplink subframes corresponding to the reserved processes may be randomly used for transmitting data packets.

Further, in an embodiment of the present invention, during transmitting data packets with the uplink subframes corresponding to the reserved processes, if there is a failure for transmission of a data packet on a certain process, retransmission of the data packet may be accomplished according to the RTT of the subframe allocation type to which the certain process belongs. In an embodiment of the present invention, during the retransmission, the retransmission of the data packet may be accomplished in adaptive or non-adaptive mode. Here, the adaptive mode may refer to the default retransmission of the data packet in the format used in the original transmission of the data packet. The non-adaptive mode may refer to the retransmission of the data packet in newly specified format during the retransmission depending on a practical situation. Further, in an embodiment of the present invention, if a process of the reserved processes is scheduled for transmission of a new data packet, and if the transmission of the last data packet on the process is not successful yet, the retransmission of the last data packet on the process is terminated and the new data packet is transmitted on the process. Here, the transmission of the last data packet on the process may be a transmission for the semi-persistent scheduling of the real time service or may be a transmission for the dynamic scheduling of other services.

With the method for resource scheduling provided in an embodiment of the present invention, signaling transmission is decreased and signaling overhead is reduced. By reserving multiple processes for the uplink semi-persistent scheduling for service transmission, the collision problem existing in the uplink semi-persistent scheduling in the prior art may be well solved and system performance is dramatically improved.

Further, if it is determined that there is a collision, when the eNB determines the reserved processes for the uplink semi-persistent scheduling, in addition to the random selection of process described in the above Step 101, in an embodiment of the present invention, the eNB may also determine the reserved processes for the uplink semi-persistent scheduling according to the subframe allocation type, the period of the semi-persistent scheduling of the real time service and the maximum transmission delay of the real time service. In an embodiment of the present invention, if subframes corresponding to several processes are adjacent in time sequence, the processes may be called as adjacent processes. Preferably, the eNB may determine the reserved processes for the uplink semi-persistent scheduling among the adjacent processes.

As stated above, there may be two different modes for selecting the reserved processes among the adjacent processes.

Mode 1: Two adjacent processes may be selected as the reserved processes as default among the adjacent processes of the subframe allocation type and the two reserved adjacent processes may be a set of reserved processes.

Mode 2: As shown in Fig.2, it is a preferred method for determining the reserved processes for the uplink semi-persistent scheduling among the adjacent processes according to an embodiment of the present invention. The method may include the following steps.

S200: The maximum number of required processes in the maximum transmission delay of the real time service is determined.

In an embodiment of the present invention, the maximum number of required processes may be determined according to the following equation:

the maximum number of required processes = floor (the maximum transmission delay/the period of the semi-persistent scheduling)

That is, the maximum number of required processes is an integer part of the quotient of the maximum transmission delay divided by the period of the semi-persistent scheduling.

S201: The maximum number of adjacent processes under a subframe allocation type is determined according to the subframe allocation type.

S202: The reserved processes for the uplink semi-persistent scheduling are determined.

In an embodiment of the present invention, the number of reserved processes for the uplink semi-persistent scheduling may be determined by choosing a smaller value between the maximum number of adjacent processes and the maximum number of required processes. Thereby, the processes for the uplink semi-persistent scheduling may be further confirmed. All the processes are adjacent processes.

The above-mentioned Fig. 2 is a preferred method for determining the reserved processes for the uplink semi-persistent scheduling according to an embodiment of the present invention. Optionally, in an embodiment of the present invention, given comprehensive consideration of the overall scheduling of resources under the eNB, the number of reserved processes for the uplink semi-persistent scheduling determined by the eNB may also be different from that determined in the above step S202, for example, greater than or less than the number of reserved processes determined in the step S202.

After the reserved processes for the uplink semi-persistent scheduling are determined according to the above preferred method, resources are scheduled according to the method provided in the above-mentioned embodiment of the present invention for transmission of services.

With the method according to an embodiment of the present invention, signaling transmission is decreased and signaling overhead is reduced. By reserving multiple processes for the uplink semi-persistent scheduling for service transmission, the collision problem existing in the uplink semi-persistent scheduling in the prior art may be well solved and system performance is dramatically improved. Further, the reserved processes for the uplink semi-persistent scheduling are determined by the preferred method according to an embodiment of the present invention; since the reserved processes are selected from the adjacent processes, the method can further reduce delay and delay jitter of the data packets and improve users' service experience.

Preferably, in an embodiment of the present invention, if a data packet on a certain process among the reserved processes is not received correctly, and there is a transmission chance before the certain process is scheduled to transmit data packets of the service in the next time, the eNB may dynamically schedule the certain process for data packet transmission of other services depending on practical requirements. Thus, further utilization of resources and system performance are improved through the reuse of processes.

Further, when the eNB determines that no process needs to be reserved for the real time service in step 100, the following steps may be executed.

Step 104: The eNB may transmit a notification message to the UE, which carries information indicating that there is no reserved process.

In an embodiment of the present invention, the notification message may be signaling such as an RRC signaling. When the information indicating that there is no reserved process is carried via the RRC signaling, a specific bit may be defined in the RRC signaling to represent whether the information indicating that there is no reserved process is carried via the RRC signaling. For example, value "0" of the specific bit may mean that there is no reserved process, i.e. no process needs to be reserved. Two or more specific bits in the RRC signaling are used to represent whether the information indicating that there is no reserved process is carried via the RRC signaling. Taking the two specific bits as an example, value "00" of the two specific bits may mean that there is no reserved process, i.e. no process needs to be reserved. In an embodiment of the present invention, the information indicating that there is no reserved process may also be carried via the RRC signaling in other modes. For example, a cell is defined in the RRC signaling for representing information on the reserved processes. If there is no defined cell in the distributed RRC signaling, it is meant that no reserved process is needed for this transmission of the real time service. A cell is also defined in the RRC signaling for representing whether it is a multiple pattern mode. Value "0" for the cell may represent multiple-pattern mode is not used for this transmission of the real time service.

Step 105: The UE is instructed to transmit data packets on uplink subframes corresponding to the period of the semi-persistent scheduling of the real time service.

In an embodiment of the present invention, when it is determined that no reserved process is needed for the real time service, service transmission may be accomplished according to the semi-persistent scheduling in the prior art. For example, the eNB instructs the UE to transmit data packets on uplink subframes corresponding to the period of semi-persistent scheduling of the real time service. Here, a PDCCH signaling may be used to notify the UE of the period of the semi-persistent scheduling of the real time service and activate the UE to transmit data packets on the uplink subframes corresponding to the period of the semi-persistent scheduling of the real time service.

The method for scheduling resources according to an embodiment of the present invention will be described in detail by taking subframe allocation type 1 as an example. As shown in Fig. 3, in the present embodiment, the period of the semi-persistent scheduling of the real time service is 20 ms, the maximum transmission delay of the real time service is 50 ms, and the RTT of the subframe allocation type 1 is 10 ms. Since the least common multiple of the RTT (10 ms) and the period of the semi-persistent scheduling (20ms) is 20 ms, which is less than the maximum transmission delay 50 ms, it is determined that there is a collision. Collisions will occur between the second and fourth retransmission of a data packet and the initial transmission of a subsequent data packet, and the method for resource scheduling according to an embodiment of the present invention may be used to transmit the real time service. For example, the eNB may select two processes from four processes and reserve the selected two processes for the uplink semi-persistent scheduling. For example, two processes, process 1 and process 3 in the present embodiment, may be selected randomly from the four processes. In the figure, the horizontal direction represents time sequence of frames, and each interval represents a subframe of 1 ms. The vertical direction represents different processes and time sequence resources the processes may occupy. Gray blocks in the figure represent the time sequence resources the processes may occupy. The interval between two adjacent time sequence resources occupiable by the same process is the RTT of the process, which is 10 ms as shown in the figure. In the figure, the gray blocks pointed by arrows represent time sequence resources for transmitting new data packets. The number in the gray blocks represents the serial number of the transmitted new data packets. Gray blocks without number may be used for retransmission of data packets on the process.

The eNB may notify the UE of information on the two reserved processes via the RRC signaling, which may be, for example, the number of processes, process numbers, process set, subframe numbers corresponding to the processes or subframe set corresponding to the processes or a multiple-pattern mode, and further may also be any two, more or all of the above-mentioned information. The eNB instructs the UE to transmit data packets on uplink subframes corresponding to the two reserved processes via the PDCCH signaling. For example, the eNB may instruct, via the PDCCH signaling, the UE about the uplink subframe corresponding to the process that should be used for the transmission of the first data packet such as data packet 1 in the figure and activate initial transmission of the data packet 1 on the corresponding subframe as shown in the figure. In the present embodiment, depending on the processing time requirement from the UE's receipt of the PDCCH signaling for determination to the transmission of uplink data packets, the point of time on which the eNB transmits the PDCCH signaling should be ahead of the activation point of time.

The UE may use uplink subframes corresponding to the two processes in a sequential and cycling mode to transmit data packets, i.e., gray blocks as indicated by arrows in the figure are used for transmitting new data packets. In this case, the period of the semi-persistent scheduling becomes 25 ms (i.e. an interval from transmitting data packet 1 on the uplink subframe corresponding to the process 1 to transmitting data packet 2 on the uplink subframe corresponding to the process 3) and 15 ms (i.e. an interval from transmitting the data packet 2 on the uplink subframe corresponding to the process 3 to transmitting the data packet 3 on the uplink subframe corresponding to the process 1), and the arrival period for a data packet to arrive the eNB is delayed 5 ms and brought forward 5 ms respectively. In an embodiment of the present invention, the UE may also transmit data packets on the uplink subframes corresponding to the reserved processes in other modes. For example, the uplink subframes corresponding to the reserved processes may be randomly used for transmitting data packets.

If a data packet transmitted on a certain process of the two processes is not received correctly by the eNB, before the certain process is scheduled for transmitting a new data packet, all resource positions of the certain process may be used for adaptive or non-adaptive retransmission according to the RTT. As shown in the figure, if the data packet 1 on the process 1 of the two processes is not received correctly by the eNB, before the process 1 is scheduled for transmitting the data packet 3, all resource positions of the process 1 (i.e. positions indicated by the gray blocks on the process 1 in the figure) may be used for adaptive or non-adaptive retransmission according to the RTT of the process 1.

With the method for resource scheduling according to an embodiment of the present invention, signaling transmission is reduced, signaling overhead is reduced, collision problem with the uplink semi-persistent scheduling in the prior art is well solved, system performance is improved and users' service experience is improved.

Preferably, if transmitting a data packet on a certain process of the reserved two processes is successful, and there is a transmission chance before the certain process is scheduled to transmit data packets of the service in the next time, the eNB may dynamically schedule the certain process to transmit a data packet of other services depending on practical requirements. For example, if it is determined that the data packet 1 on the process 1 of the two processes is correctly received by the eNB, before the uplink subframe corresponding to the process 1 is used for transmitting the data packet 3 in the next time, if there is still a transmission chance, the eNB may dynamically schedule the process 1 for transmitting other services depending on requirements. At the time of transmitting the data packet 3, transmission of previous data packets on the process 1 is terminated regardless of their success or failure and transmission of the data packet 3 is started directly. Thus, the reuse of process further improves utilization of resources and system performance.

The method for resource scheduling according to an embodiment of the present invention will be described in detail by taking subframe allocation type 1 as an example. In the present embodiment, the period of the semi-persistent scheduling of the real time service is 20 ms, the maximum transmission delay of the real time service is 50 ms, and the RTT for the subframe allocation type 1 is 10 ms. In the present embodiment, since the least common multiple for the RTT (10 ms) and the period of the semi-persistent scheduling (20ms) is 20 ms, which is less than the maximum transmission delay 50 ms, it is determined there is a collision. Collisions will occur between the second and fourth retransmission of a data packet and the initial transmission of a subsequent data packet, the method of resource scheduling according to an embodiment of the present invention may be used to transmit the real time service. The eNB may use the preferred method according to an embodiment of the present invention to determine the reserved processes for the semi-persistent scheduling when selecting the reserved processes.

As shown in Fig. 4, the horizontal direction represents time sequence of frames, each interval representing a subframe of 1 ms. The vertical direction represents different processes and time sequence resources the processes may occupy. Gray blocks in the figure represent the time sequence resources the processes may occupy. For the same process, the interval between adjacent two occupiable time sequence resources is the RTT of the process, which is 10 ms as shown in the figure. In the figure, the gray blocks pointed by arrows represent time sequence resources for transmitting new data packets. The numbers in the gray blocks represent the serial numbers of the newly transmitted data packets. A gray block without the number may be used for retransmission of a data packet on the process. As shown in the figure, the first two processes and the last processes are adjacent processes because they occupy adjacent time sequence resources, and therefore the maximum number of adjacent processes of the subframe allocation type 1 is 2.

To avoid collision within the maximum transmission delay, it is determined that two adjacent processes are reserved for the uplink semi-persistent scheduling. These two adjacent processes may be the first adjacent processes (i.e., Subset 1), or may be the last two adjacent processes (i.e., Subset 2).

Reserving the first two adjacent processes (i.e., Subset 1) is taken as an example. The eNB may notify the UE of information on the reserved adjacent processes via the RRC signaling, which may be, for example, the number of processes, the process numbers, process set, subframe numbers corresponding to the processes or subframe set corresponding to the processes, or the multiple-pattern mode. Further, it may also be any two, more or all of the above-mentioned information. For example, the eNB may notify the UE of the multiple-pattern mode via the RRC signaling. The eNB instructs the UE to transmit data packets on uplink subframes corresponding to the two reserved adjacent processes via the PDCCH signaling. For example, the eNB may instruct, via the PDCCH signaling, the UE about the uplink subframe corresponding to the process that should be used for the transmission of the first data packet (e.g., the data packet 1 in the figure) and activate initial transmission of the data packet 1 on the corresponding subframe as shown in the figure. Here, if the PDCCH signaling indicates that the first uplink subframe is used for the transmission of the first data packet (e.g., the data packet 1 in the drawing), it is determined that the process set of Subset 1 is reserved for this transmission of the real time service. In the present embodiment, depending on the processing time requirement from the UE's receipt of the PDCCH signaling for determination to the transmission of uplink data packets, the point of time on which the eNB transmits the PDCCH signaling should be ahead of the activation point of time.

If the UE may use uplink subframes corresponding to the two adjacent processes in the Subset 1 in a sequential and cycling mode to transmit data packets, i.e., data packets are transmitted at the positions indicated by the arrows in the figure, the period of the semi-persistent scheduling becomes 21 ms (i.e. an interval from transmitting the data packet 1 on the uplink subframe corresponding to the process 1 to transmitting the data packet 2 on the uplink subframe corresponding to the process 3) and 19 ms (i.e. an interval from transmitting the data packet 2 on the uplink subframe corresponding to the process 2 to transmitting the data packet 3 on the uplink subframe corresponding to the process 1).The arrival period for a data packet to arrive the eNB is delayed 1 ms and brought forward 1 ms respectively. In an embodiment of the present invention, the UE may also transmit data packets on uplink subframes corresponding to the reserved processes in other modes. For example, uplink subframes corresponding to the reserved processes may be randomly used for transmitting data packets.

If a data packet transmitted on a certain process of the two adjacent processes is not received correctly by the eNB, before the certain process is scheduled for transmitting a new data packet, all resource positions of the certain process may be used for adaptive or non-adaptive retransmission according to the RTT. As shown in the figure, if the data packet 1 on the process 1 of the two adjacent processes is not received correctly by the eNB, before the process 1 is scheduled for transmitting the data packet 3, all resource positions of the process 1 (i.e. positions indicated by gray blocks on the process 1 in the figure) may be used for adaptive or non-adaptive retransmission according to the RTT of the process 1.

With the method for resource scheduling according to an embodiment of the present invention, signaling transmission is reduced, signaling overhead is reduced, collision problem with the uplink semi-persistent scheduling in the prior art is well solved, delay and delay jitter of data packets of the semi-persistent scheduling is reduced, system performance is well improved and users' service experience is improved.

Preferably, if transmitting a data packet on a certain process of the reserved two adjacent processes is successful, and there is a transmission chance before the certain process is scheduled to transmit data packets of the service in the next time, the eNB may dynamically schedule the certain process to transmit data packets of other services depending on practical requirements. For example, if it is determined that the data packet 1 on the process 1 of the two adjacent processes is correctly received by the eNB, before the uplink subframe corresponding to the process 1 is used for transmitting the data packet 3 in the next time, if there is still a transmission chance, the eNB may dynamically schedule the process 1 for transmitting other services depending on requirements. At the time of transmitting the data packet 3, transmission of previous data packets on the process 1 is terminated regardless of their success or failure and transmission of the data packet 3 is started directly. Thus, the reuse of process further improves utilization of resources and system performance.

The method for resource scheduling according to an embodiment of the present invention will be described in detail by taking subframe allocation type 3 as an example. In the present embodiment, the period of the semi-persistent scheduling of the real time service is 20 ms, the maximum transmission delay of the real time service is 50 ms, and the RTT for the subframe allocation type 3 is 10 ms. In the present embodiment, since the least common multiple for the RTT (10 ms) and the period of the semi-persistent scheduling (20ms) is 20 ms, which is less than the maximum transmission delay 50 ms, it is determined there is a collision. Collisions will occur between the second and fourth retransmission of a data packet and the initial transmission of a subsequent data packet, the method of resource scheduling according to an embodiment of the present invention may be used to transmit the real time service. The eNB may use the preferred method according to an embodiment of the present invention to determine the reserved processes for the semi-persistent scheduling when selecting the reserved processes.

As shown in Fig. 5, the horizontal direction represents time sequence of frames, each interval representing a subframe of 1 ms. The vertical direction represents different processes and time sequence resources the processes may occupy. Gray blocks in the figure represent the time sequence resources the processes may occupy. For the same process, the interval between adjacent two occupiable time sequence resources is the RTT of this process, which is 10 ms as shown in the figure. In the figure, gray blocks pointed by arrows represent time sequence resources for transmitting new data packets. The numbers in the gray blocks represent the serial numbers of the newly transmitted data packets. A gray square without the number may be used for retransmission of data packets on the process. As shown in the figure, all the three processes are adjacent processes because their occupied time sequence resources are adjacent. Therefore the maximum number of adjacent processes for the subframe allocation type 3 is 3.

To avoid collision within the maximum transmission delay, the maximum number of required processes within the maximum transmission delay is floor (50 ms/20 ms) = 3, that is, the maximum number of required processes within the maximum transmission delay is 3.

It is determined that three adjacent processes are reserved for the uplink semi-persistent scheduling according to the maximum number of adjacent processes (3) and the maximum number of required processes (3) within the maximum transmission delay. Optionally, in an embodiment of the present invention, given comprehensive consideration of the overall scheduling of resources under the eNB, the number of reserved processes for the uplink semi-persistent scheduling determined by the eNB may also be other than the three reserved processes as determined above, for example, the number of reserved processes determined may be greater than or less than 3.

Description will be given below by taking three reserved processes as an example. The eNB may notify the UE of information on the reserved adjacent processes via the RRC signaling, which may be, for example, the number of processes, the process numbers, process set, subframe numbers corresponding to the processes or subframe set corresponding to the processes, or the multiple-pattern mode. Further, it may also be any two, more or all of the above-mentioned information. The eNB instructs the UE to transmit data packets on uplink subframes corresponding to the three reserved adjacent processes via the PDCCH signaling. For example, the eNB may instruct, via the PDCCH signaling, the UE about the uplink subframe corresponding to the process that should be used for the transmission of the first data packet (e.g., the data packet 1 in the figure) and activate initial transmission of the data packet 1 on the corresponding subframe as shown in the figure. In the present embodiment, depending on the processing time requirement from the UE's receipt of the PDCCH signaling for determination to the transmission of uplink data packets, the point of time on which the eNB transmits the PDCCH signaling should be ahead of the activation point of time.

If the UE may use the uplink subframes corresponding to the reserved three adjacent pro cesses to transmit data packets in a sequential and cycling mode, i.e., data packets are transmitted at the positions indicated by the arrows in the figure, the period of the semi-persistent scheduling becomes 21 ms (i.e. the interval from transmitting the data packet 1 on the uplink subframe corresponding to the process 1 to transmitting the data packet 2 on the uplink subframe corresponding to the process 3), 21 ms (i.e. the interval from transmitting the data packet 2 on the uplink subframe corresponding to the process 2 to transmitting the data packet 3 on the uplink subframe corresponding to the process 3) and 18 ms (i.e. the interval from transmitting the data packet 3 on the uplink subframe corresponding to the process 3 to transmitting a new data packet on the uplink subframe corresponding to the process 1) respectively. The arrival period for a data packet to arrive the eNB is delayed at most 2 ms and brought ahead at most 2 ms. In an embodiment of the present invention, the UE may also transmit data packets on uplink subframes corresponding to the reserved processes in other modes. For example, uplink subframes corresponding to the reserved processes may be randomly used for transmitting data packets.

If a data packet transmitted on a certain process of the three adjacent processes is not received correctly by the eNB, before the certain process is scheduled for transmitting a new data packet, all resource positions of the certain process may be used for adaptive or non-adaptive retransmission according to the RTT. As shown in the figure, if the data packet 1 on the process 1 of the three adjacent processes is not received correctly by the eNB, before the process 1 is scheduled for transmitting a new data packet, all resource positions of the process 1 (i.e. positions indicated by gray blocks on the process 1 in the figure) may be used for adaptive or non-adaptive retransmission according to the RTT of the process 1.

With the method for resource scheduling according to an embodiment of the present invention, signaling transmission is reduced, signaling overhead is reduced, collision problem with the uplink semi-persistent scheduling in the prior art is well solved, delay and delay jitter of data packets of the semi-persistent scheduled are reduced, system performance is well improved and users' service experience is improved.

Preferably, if transmitting a data packet on a certain process of the reserved three adjacent processes is successful, and there is a transmission chance before the certain process is scheduled to transmit data packets of the service in the next time, the eNB may dynamically schedule the certain process for data packet transmission of other services depending on practical requirements. For example, if it is determined that the data packet 1 on the process 1 of the three adjacent processes is correctly received by the eNB, before the uplink subframe corresponding to the process 1 is used for transmitting a new data packet in the next time, if there is still a transmission chance, the eNB may dynamically schedule the process 1 for transmitting other services depending on requirements. At the time of transmitting the new data packet, transmission of previous data packets on the process 1 is terminated regardless of their success or failure and transmission of the new data packet is started directly. Thus, the reuse of process further improves utilization of resources and system performance.

In determining the reserved processes from the adjacent processes, in addition to determining the reserved processes as shown in Fig. 2, two adjacent processes of the adjacent processes may also be reserved by default and the two adjacent processes reserved by default may be treated as a process set. Details are as shown in Fig. 6.

The method for resource scheduling according to an embodiment of the present invention will be described in detail by taking the subframe allocation type 3 as an example. In the present embodiment, the period of the semi-persistent scheduling of the real time service is 20 ms, the maximum transmission delay of the real time service is 50 ms, and the RTT of the subframe allocation type 3 is 10 ms. In the present embodiment, since the least common multiple for the RTT (10 ms) and the period of the semi-persistent scheduling (20ms) is 20 ms, which is less than the maximum transmission delay 50 ms, it is determined there is a collision. Collisions will occur between the second and fourth retransmission of a data packet and the initial transmission of a subsequent data packet, and the method of resource scheduling according to an embodiment of the present invention may be used to transmit the real time service.

As shown in Fig. 6, the horizontal direction represents time sequence of frames, each interval representing a subframe of 1 ms. The vertical direction represents different process and time sequence resources the processes may occupy. Gray blocks in the figure represent the time sequence resources the processes may occupy. For the same process, the interval between adjacent two occupiable time sequence resources is the RTT of this process, which is 10 ms as shown in the figure. In the figure, the gray blocks pointed by arrows represent time sequence resources for transmitting new data packets. The numbers in the gray blocks represent the serial numbers of the newly transmitted data packets. A gray block without the number may be used for retransmission of a data packet on the process. As shown in the figure, all the three processes are adjacent processes because their occupied time sequence resources are adjacent. Therefore the maximum number of adjacent processes for the subframe allocation type 3 is 3.

To avoid collision within the maximum transmission delay, as default, two adjacent processes of the three adjacent processes may be reserved. For example, the reserved processes may be the first adjacent processes (e.g., Subset 1 shown in the figure) or may be the last two adjacent processes (e.g., Subset 2 shown in the figure).

Description will be given below by taking reserving the first two adjacent processes (e.g., Subset 1 shown in the figure) as an example. The eNB may notify the UE of information on the reserved adjacent processes via the RRC signaling, which may be, for example, the number of processes, the process numbers, process set, subframe numbers corresponding to the processes or subframe set corresponding to the processes, or the multiple-pattern mode. Further, it may also be any two, more or all of the above-mentioned information. Here, the eNB may notify the UE of the multiple-pattern mode via the RRC signaling. The eNB instructs the UE to transmit data packets on uplink subframes corresponding to the reserved adjacent processes via the PDCCH signaling. For example, the eNB may instruct, via the PDCCH signaling, the UE about the uplink subframe corresponding to the process that should be used for the transmission of the first data packet (e.g., the data packet 1 in the figure) and activate initial transmission of the data packet 1 on the corresponding subframe as shown in the figure. Here, if the PDCCH signaling indicates that the first uplink subframe is used for the transmission of the first data packet (e.g., the data packet 1 in the figure), what is reserved is the uplink subframe resources corresponding to the process set of Subset 1.If the PDCCH signaling indicates that the second or third uplink subframe is used for the transmission of the first data packet (e.g., the data packet 1 in the figure), what is reserved is the uplink subframe resources corresponding to the process set of Subset 2. In the present embodiment, depending on the processing time requirement from the UE's receipt of the PDCCH signaling for determination to the transmission of uplink data packets, the point of time on which the eNB transmits the PDCCH signaling should be ahead of the activation point of time. As shown in the figure, description will be given by taking reserving Subset 1 as an example.

If the UE may use the uplink subframes corresponding to the reserved two adjacent pro cesses to transmit data packets in a sequential and cycling mode, i.e., data packets are transmitted at the positions indicated by the arrows in the figure, the period of the semi-persistent scheduling becomes 21 ms (i.e. the interval from transmitting the data packet 1 on the uplink subframe corresponding to the process 1 to transmitting the data packet 2 on the uplink subframe corresponding to the process 3) and 19 ms (i.e. the interval from transmitting the data packet 2 on the uplink subframe corresponding to the process 2 to transmitting the data packet 3 on the uplink subframe corresponding to the process 1) respectively. The arrival period for a data packet to arrive the eNB is delayed at most 1 ms and brought ahead at most 1 ms. In an embodiment of the present invention, the UE may also transmit data packets on uplink subframes corresponding to the reserved processes in other modes. For example, uplink subframes corresponding to the reserved processes ma y be randomly used for transmitting data packets.

If a data packet transmitted on a certain process of the two adjacent processes is not received correctly by the eNB, before the certain process is scheduled for transmitting a new data packet, all resource positions of the certain process may be used for adaptive or non-adaptive retransmission according to the RTT. As shown in the figure, if the data packet 1 on the process 1 of the two adjacent processes is not received correctly by the eNB, before the process 1 is scheduled for transmitting a new data packet, all resource positions of the process 1 (i.e. positions indicated by the gray blocks on the process 1 in the figure) may be used for adaptive or non-adaptive retransmission, according to the RTT of the process 1.

With the method for resource scheduling according to an embodiment of the present invention, signaling transmission is reduced, signaling overhead is reduced, and collision problem with the uplink semi-persistent scheduling in the prior art is well solved. Since the reserved processes are determined among the adjacent processes, delay and delay jitter of data packets of the semi-persistent scheduled are well reduced, system performance is well improved and users' service experience is improved.

Preferably, if transmitting a data packet on a certain process of the reserved two adjacent processes is successful, and there is a transmission chance before the certain process is scheduled to transmit data packets of the service in the next time, the eNB may dynamically schedule the certain process for transmitting data packets of other services depending on practical requirements. For example, if it is determined that the packet 1 on the process 1 of the two adjacent processes is correctly received by the eNB, before the uplink subframe corresponding to the process 1 is used for transmitting a new data packet in the next time, if there is still a transmission chance, the eNB may dynamically schedule the process 1 for transmitting other services depending on requirements. At the time of transmitting the new data packet, transmission of previous data packets on the process 1 is terminated regardless of their success or failure and transmission of the new data packet is started directly. Thus, the reuse of process further improves utilization of resources and system performance.

Further, for the subframe allocation type 0 with the average RTT of 11.67 ms or the subframe allocation type 6 with the RTT of 12 ms, for the real time service with the period of the semi-persistent scheduling of 20 ms and the maximum transmission delay of 50 ms, since the least common multiple of the RTT and the period of the semi-persistent scheduling is greater than 50 ms (233.4 ms and 60 ms respectively in the present embodiment), it is determined that there is no collision within the maximum transmission delay of the service. In this case, no process needs to be reserved, the eNB may notify the UE via the RRC signaling that no process needs to be reserved for the real time service, notify the UE via the PDCCH signaling of the period of the semi-persistent scheduling of the real time service and activate the UE to transmit data packets on the uplink subframes corresponding to the period of the semi-persistent scheduling of the real time service. Data packets of the semi-persistent scheduling may occupy different processes temporarily according to time relationship as in the prior art.

As shown in Fig. 7, an embodiment of the present invention also provides a base station. The base station includes a judgment module 700, a determination module 702 and a communication module 704.

The judgment module 700 is configured to judge whether processes need to be reserved for the real time service.

When there is a real time service to be transmitted, the judgment module 700 of the base station may first determine whether processes need to be reserved for the real time service for transmission. If it is determined that processes need to be reserved for the real time service for transmission, the judgment module 700 may determine whether there is a collision during the maximum transmission delay of the real time service according to the RTT of the subframe allocation type and the period of the semi-persistent scheduling of the real time service. If it is determined that there is a collision, processes need to be reserved for the real time service. If it is determined that there is no collision, no process needs to be reserved for the real time service. Here, determining whether there is a collision may be comparing the least common multiple between the RTT of the subframe allocation type and the period of the semi-persistent scheduling of the real time service and the maximum transmission delay of the real time service. If the least common multiple between the RTT of the subframe allocation type and the period of the semi-persistent scheduling of the real time service is less than or equal to the maximum transmission delay of the real time service, it is determined that there is a collision. If the least common multiple between the RTT of the subframe allocation type and the period of the semi-persistent scheduling of the real time service is greater than the maximum transmission delay of the real time service, it is determined that there is no collision.

The determination module 702 is configured to determine reserved processes for the uplink semi-persistent scheduling if it is determined by the judgment module 700 that processes need to be reserved.

The communication module 704 is configured to transmit the information on the processes reserved by the determination module 702 to the UE and instruct the UE to transmit data packets on uplink subframes corresponding to the reserved processes.

In an embodiment of the present invention, the communication module 704 may transmit the information on the determined reserved processes to the UE via a signaling. For example, the information on the reserved processes may be transmitted to the UE via the RRC signaling. The eNB may also transmit the information on the reserved processes to the UE via other system signaling. In the present embodiment, the information on the reserved processes may be the number of processes, process numbers, process set, subframe numbers corresponding to the processes or subframe set corresponding to the processes or the multiple pattern mode, and may also be arbitrary two, more or all of the above-mentioned information.

In embodiments of the present invention, the communication module 704 may instruct via the PDCCH signaling the UE to transmit data packets on uplink subframes corresponding to the reserved processes. Preferably, the communication module 704 may instruct the UE about the uplink subframe corresponding to the process that should be used for the transmission of the first data packet via the PDCCH signaling. The process that should be used for the transmission of the first data packet is any one of the at least two reserved processes.

Optionally, in an embodiment of the present invention, the determination module 702 may include a random selection module 7020 configured to randomly select at least two processes and determine the randomly selected at least two processes to be reserved for the uplink semi-persistent scheduling.

Optionally, in determining the processes reserved for the uplink semi-persistent scheduling, in addition to the manner in which the random selection module 7020 is used to randomly select the processes, in an embodiment of the present invention, the determination module 702 may also determine the processes reserved for the uplink semi-persistent scheduling according to information such as the subframe allocation type and the period of the semi-persistent scheduling. Specific details are as follows.

Optionally, in an embodiment of the present invention, the determination module 702 may also include a computation module 7022, a confirmation submodule 7024 and a selection submodule 7026.

The computation module 7022 is configured to determine the maximum number of required processes within the maximum transmission delay according to the maximum transmission delay and the period of the semi-persistent scheduling of the real time service. In an embodiment of the present invention, the computation module 7022 may determine the maximum number of required processes according to the following equation: The maximum number of required processes = floor (the maximum transmission delay/ the period of the semi-persistent scheduling).That is, the maximum number of required processes is an integer part of the quotient of the maximum transmission delay divided by the semi-persistent scheduling period.

The confirmation submodule 7024 is configured to determine the maximum number of adjacent processes under the subframe allocation type according to the subframe allocation type.

The selection submodule 7026 is configured to determine the reserved processes for the uplink semi-persistent scheduling according to the maximum number of required processes within the maximum transmission delay determined by the computation module 7022 and the maximum number of adjacent processes confirmed by the confirmation submodule 7024. In an embodiment of the present invention, the selection submodule 7026 may determine the number of reserved processes for the uplink semi-persistent scheduling by taking the smaller between the maximum number of adjacent processes and the maximum number of required processes. Thereby, the processes for the uplink semi-persistent scheduling may be further confirmed and all the processes are adjacent processes.

The communication module 704 is also configured to transmit to the UE a notification message including information indicating that there is no reserved process if it is determined by the judgment module 700 that no process needs to be reserved for the real time service, and instruct the UE to transmit data packets on uplink subframes corresponding to the period of the semi-persistent scheduling of the real time service.

Thus, through the resource scheduling performed by the base station according to an embodiment of the present invention, signaling transmission is decreased and signaling overhead is reduced. By reserving multiple processes for the uplink semi-persistent scheduling for service transmission, the collision problem with the uplink semi-persistent scheduling in the prior art may be well solved and system performance is dramatically improved.

Further, an embodiment of the present invention also provides a communication system. The system may include a base station communicatively coupled with a UE. When there is a real time service to be transmitted, if it is determined processes need to be reserved for the real time service, the base station may determine reserved processes for the uplink semi-persistent scheduling, tr ansmit a notification message including information on the reserved processes to the UE, and instruct the UE to transmit data packets on uplink subframes corresponding to the reserved processes.

In the communication system, when determining the reserved processes for the uplink semi-persistent scheduling, the base station may reserve two processes as default or reserve more than two processes according to the real time service. The base station may randomly select two or more reserved processes for the uplink semi-persistent scheduling, or determine the reserved processes for the uplink semi-persistent scheduling according to information such as the subframe allocation type and the period of the semi-persistent scheduling as in the above-mentioned embodiments. Specific modes are described in Fig.2.

In the communication system, as in the methods recited in the embodiments of Figs. 1 to 6, the notification message may be a signaling that includes the information on the determined reserved processes. For example, the signaling may be an RRC signaling. It may also be other system signaling. In the present embodiment, the information on the processes may be the number of processes, process numbers, process set, subframe numbers corresponding to the processes or subframe set corresponding to the processes or the multiple-pattern mode, and may also be arbitrary two, more or all of the above-mentioned information.

In an embodiment of the present invention, the base station may instruct via the PDCCH signaling the UE to transmit data packets on uplink subframes corresponding to the reserved processes. Preferably, the base station may instruct, via the PDCCH signaling, the UE about the uplink subframe corresponding to the process that should be used for the transmission of the first data packet. The process that should be used for the transmission of the first data packet is any one of at least two reserved processes.

In the communication system, the UE may receive the notification message from the base station, acquire information on the reserved processes, receive the instruction transmitted to the UE from the base station, and transmit data packets on uplink subframes corresponding to the reserved processes. For example, data packets are transmitted on the uplink subframe corresponding to the process that should be used for the transmission of the first data packet instructed by the base station. The UE m ay use the uplink subframes corresponding to the reserved processes to transmit data packets in a sequential and cycling mode. In an embodiment of the present invention, the UE may also transmit data packets on the uplink subframes corresponding to the reserved processes in other modes. For example, uplink subframes corresponding to the reserved processes may be randomly used for transmitting data packets.

Further, in the communication system, during transmitting data packets on the uplink subframes corresponding to the reserved processes, if transmission of a data packet on a certain process is not successful, retransmission of the data packet may be accomplished according to the RTT of the subframe allocation type to which the certain process belongs. In an embodiment of the present invention, the retransmission of the data packet may be accomplished with adaptive or non-adaptive mode. Here, the adaptive mode may indicate that the retransmission of the data packet is performed by default in the format used in the initial transmission of the data packet, and the non-adaptive mode may indicate that the retransmission of the data packet is performed with a newly specified format depending on practical situations. Further, in an embodiment of the present invention, if a certain process of the reserved processes is scheduled for transmission of a new data packet, and if the transmission of the last data packet on the certain process is not successful yet, retransmission of the last data packet is terminated and the new data packet is transmitted on the certain process. Here, the transmission of the last data packet on the certain process may be a transmission for the semi-persistent scheduling of the real time service or may be a transmission for the dynamic scheduling of other services.

Through the resource scheduling performed by the communication system according to an embodiment of the present invention, signaling transmission is decreased and signaling overhead is reduced. By reserving multiple processes for the uplink semi-persistent scheduling for service transmission, the collision problem with the uplink semi-persistent scheduling in the prior art may be well solved and system performance is dramatically improved.

Preferably, in the communication system, if a data packet on a certain process of the reserved processes is not received correctly, and there is a transmission chance before the certain process is scheduled to transmit data packets of the service in the next time, the base station may dynamically schedule the certain process for transmitting data packets of other services depending on practical requirements. Thus, the reuse of process further improves utilization of resources and system performance.

Further, when it is determined that no process needs to be reserved for the real time service, the base station may transmit to the UE a notification message including information indicating that there is no reserved process and instruct the UE to transmit data packets on the uplink subframes corresponding to the period of the semi-persistent scheduling of the real time service. Here, the UE may receive the notification message from the base station, learn that the base station has not reserved any process, receive an instruction from the base station, and transmit data packets on the uplink subframes corresponding to the period of the semi-persistent scheduling of the real time service. The instruction may be a PDCCH signaling.

It is understood by those of ordinary skill in the art that all or some of the steps in the methods of the above-mentioned embodiments of may be implemented by a program that instructs relevant hardware to do so. The program may be stored on a computer readable storage medium and when executed, includes the following steps: if it is determined that processes need to be reserved for the real time service, reserved processes for the uplink semi-persistent scheduling are determined; a notification message including information on the reserved processes is sent to the UE; and the UE is instructed to transmit data packets on the uplink subframes corresponding to the reserved processes.

The above-mentioned storage medium may be a read only memory, a magnetic disk or an optical disk.

The above description is only preferred specific embodiments of the present invention, and the scope of the present invention is not limited hereto. Any variations or replacements easily occur to those skilled in the art in the technical scope disclosed by the present invention should be covered by the scope of the present invention. Therefore, the protection scope of the present invention should be based on the claims.

## Claims

**1.** A method for resource scheduling, **characterized in that** when there is a real time service to be transmitted, the method comprises:

determining reserved processes for an uplink semi-persistent scheduling if processes need to be reserved for the real time service;
transmitting to a user equipment a notification message including information on the reserved processes; and
instructing the user equipment to transmit data packets on uplink subframes corresponding to the reserved processes.

**2.** The method of claim 1, **characterized in that** the method further comprises:

transmitting to the user equipment a notification message including information indicating that there is no reserved process, if no process needs to be reserved for the real time service; and
instructing the user equipment to transmit the data packets on uplink subframes corresponding to a period of a semi-persistent scheduling of the real time service.

**3.** The method of claim 1 or 2, **characterized in that** the determining reserved processes for an uplink semi-persistent scheduling comprises:

selecting at least two processes; and
determining the selected at least two processes to be reserved for the uplink semi-persistent scheduling.

**4.** The method of claim 1, 2 or 3, **characterized in that** the determining reserved processes for an uplink semi-persistent scheduling comprises:

determining a maximum number of required processes within a maximum transmission delay of the real time service according to the maximum transmission delay of the real time service and a period of a semi-persistent scheduling of the real time service;
determining the maximum number of adjacent processes under a subframe allocation type according to the subframe allocation type; and
determining the reserved processes for the uplink semi-persistent scheduling according to the maximum number of required processes within the maximum transmission delay and the maximum number of adjacent processes.

**5.** The method of one of the claims 1 to 4, **characterized in that** the determining reserved processes for an uplink semi-persistent scheduling comprises:

selecting two adjacent processes from adjacent processes of a subframe allocation type; and
determining the selected two adjacent processes to be reserved for the uplink semi-persistent scheduling.

**6.** The method of one of the claims 1 to 5, **characterized in that** the information on the reserved processes comprises at least one of the number of processes, process numbers, a process set, subframe numbers corresponding to the processes , a subframe set corresponding to the processes, and a multiple pattern mode.

**7.** The method of one of the claims 1 to 6, **characterized in that** the notification message is a radio resource control signaling.

**8.** The method of one of the claims 1 to 7, **characterized in that** the instructing the user equipment to transmit data packets on uplink subframes corresponding to the reserved processes comprises:

instructing the user equipment to transmit the data packets on the uplink subframes corresponding to the reserved processes via a physics downlink control channel signaling.

**9.** The method of claim 8, **characterized in that** the instructing the user equipment to transmit the data packets on the uplink subframes corresponding to the reserved processes via a physics downlink control channel signaling comprises:

instructing the user equipment about an uplink subframe corresponding to a process that should be used for transmission of the first data packet via the physics downlink control channel signaling.

**10.** A method for transmitting data packets by a user equipment, **characterized in that** the method comprises:

receiving a notification message from a network, the notification message comprising information on reserved processes for an uplink semi-persistent scheduling determined by the network;
receiving an instruction from the network; and
transmitting, by the user equipment, data packets on uplink subframes corresponding to the reserved processes based on the received instruction.

**11.** The method of claim 10, **characterized in that** the notification message is a radio resource control signaling, the radio resource control signaling comprising the information on the reserved processes for the uplink semi-persistent scheduling determined by the network.

**12.** A base station, **characterized by** comprising:

a judgment module (700), configured to judge whether processes need to be reserved for a real time service;
a determination module (702), configured to determine reserved processes for an uplink semi-persistent scheduling if the judgment module (700) judges that processes need to be reserved; and
a communication module (704), configured to transmit to a user equipment information on the reserved processes determined by the determination module (702) and instruct the user equipment to transmit data packets on uplink subframes corresponding to the reserved processes.

**13.** The base station of claim 12, **characterized in that** the determination module (702) comprises:

a random selection module (7020), configured to randomly select at least two processes and determine the randomly selected at least two processes to be reserved for the uplink semi-persistent scheduling.

**14.** The base station of claim 12 or 13, **characterized in that** the determination module (702) comprises:

a computation module (7022), configured to determine the maximum number of required processes within a maximum transmission delay of the real time service according to the maximum transmission delay and a period of a semi-persistent scheduling of the real time service;
a confirmation submodule (7024), configured to determine the maximum number of adjacent processes under a subframe allocation type according to the subframe allocation type; and
a selection submodule (7026), configured to determine the reserved processes for the uplink semi-persistent scheduling according to the maximum number of required processes within the maximum transmission delay determined by the computation module (7022) and the maximum number of adjacent processes confirmed by the confirmation submodule (7024).

**15.** The base station of claim 12, 13 or 14, **characterized in that**
the communication module (704) is configured to transmit the information on the reserved process to the user equipment via a radio resource control signaling, and instruct the user equipment to transmit the data packets on the uplink subframes corresponding to the reserved processes via a physics downlink control channel signaling.

**16.** The base station of one of the claims 12 to 15, **characterized in that**
the communication module (704) is further configured to transmit to the user equipment a notification message including information indicating that there is no reserved process, if the judgment module (700) determines that no process needs to be reserved for the real time service, and instructs the user equipment to transmit the data packets on uplink subframes corresponding to a period of a semi-persistent scheduling of the real time service.

**17.** A communication system, **characterized in that** the communication system comprises a base station according to any one of claims 12 to 16 and a user equipment, the base station being communicatively coupled with the user equipment.

**18.** The communication system of claim 17, **characterized in that** the notification message is a radio resource control signaling, and the base station is further configured to transmit to the user equipment the radio resource control signaling including the information on the reserved processes.

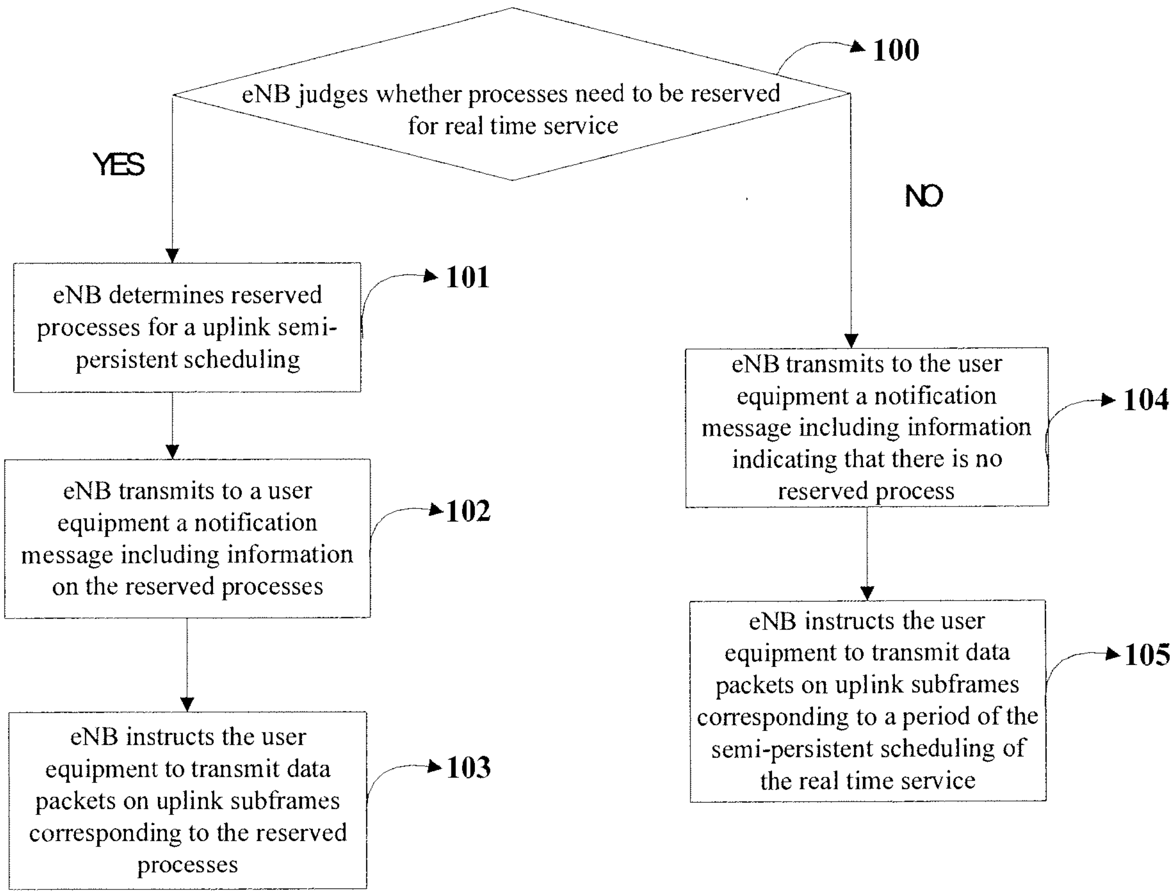
eNB judges whether processes need to be reserved for real time service
100
YES
NO
eNB determines reserved processes for a uplink semi-persistent scheduling
101
eNB transmits to a user equipment a notification message including information on the reserved processes
102
eNB instructs the user equipment to transmit data packets on uplink subframes corresponding to the reserved processes
103
eNB transmits to the user equipment a notification message including information indicating that there is no reserved process
104
eNB instructs the user equipment to transmit data packets on uplink subframes corresponding to a period of the semi-persistent scheduling of the real time service
105

Fig. 1

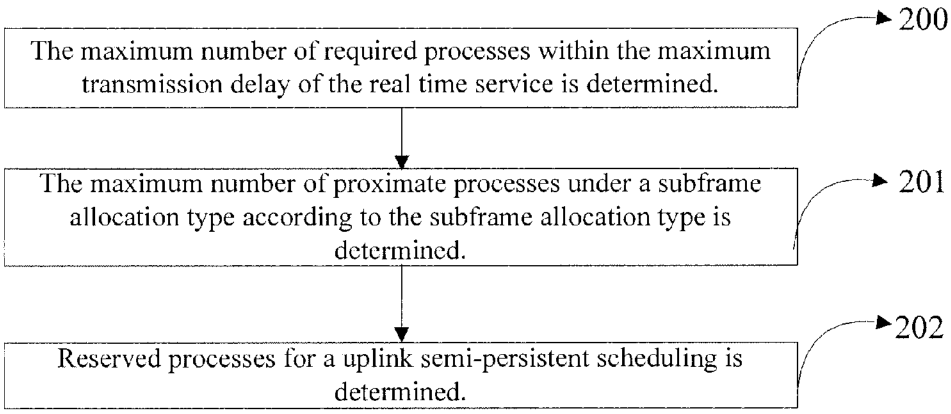
The maximum number of required processes within the maximum transmission delay of the real time service is determined.
200
The maximum number of proximate processes under a subframe allocation type according to the subframe allocation type is determined.
201
Reserved processes for a uplink semi-persistent scheduling is determined.
202

Fig. 2

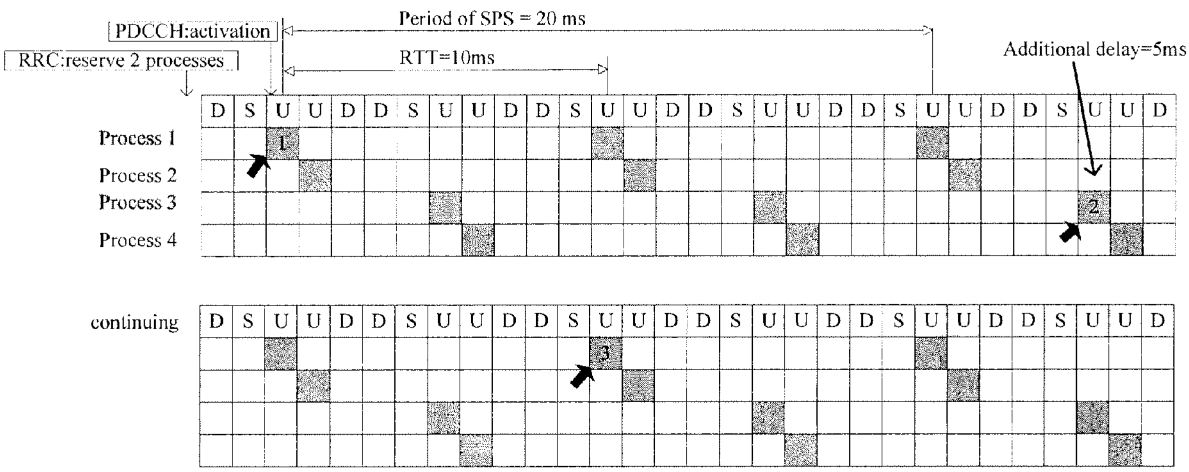
PDCCH:activation
RRC:reserve 2 processes
Period of SPS = 20 ms
RTT=10ms
Additional delay=5ms
D S U U D D S U U D D S U U D D S U U D D S U U D D S U U D
Process 1
Process 2
Process 3
Process 4
1
2
continuing
D S U U D D S U U D D S U U D D S U U D D S U U D D S U U D
3

Fig. 3

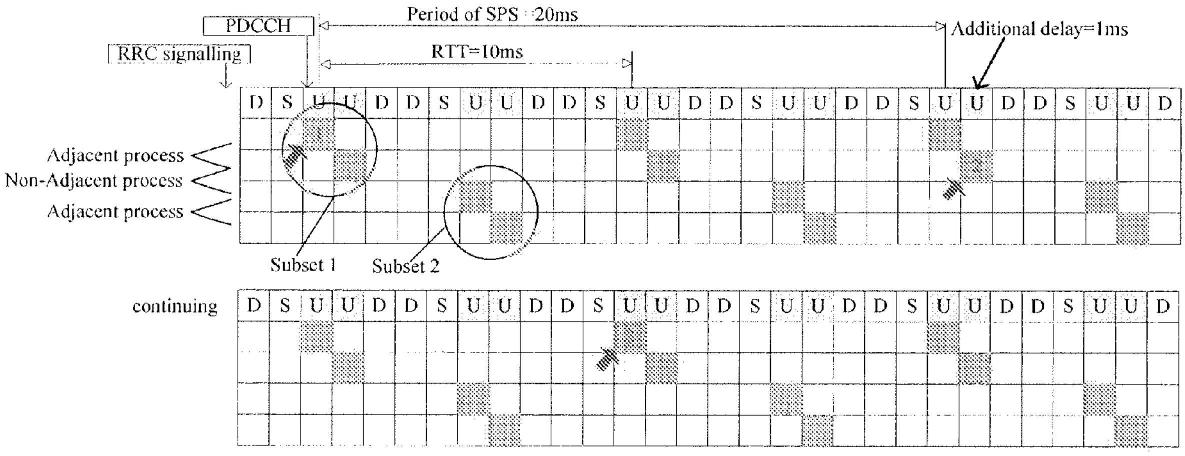
PDCCH
RRC signalling
Period of SPS =20ms
RTT=10ms
Additional delay=1ms
D S U U D D S U U D D S U U D D S U U D D S U U D D S U U D
Adjacent process
Non-Adjacent process
Adjacent process
Subset 1
Subset 2
continuing
D S U U D D S U U D D S U U D D S U U D D S U U D D S U U D

Fig. 4

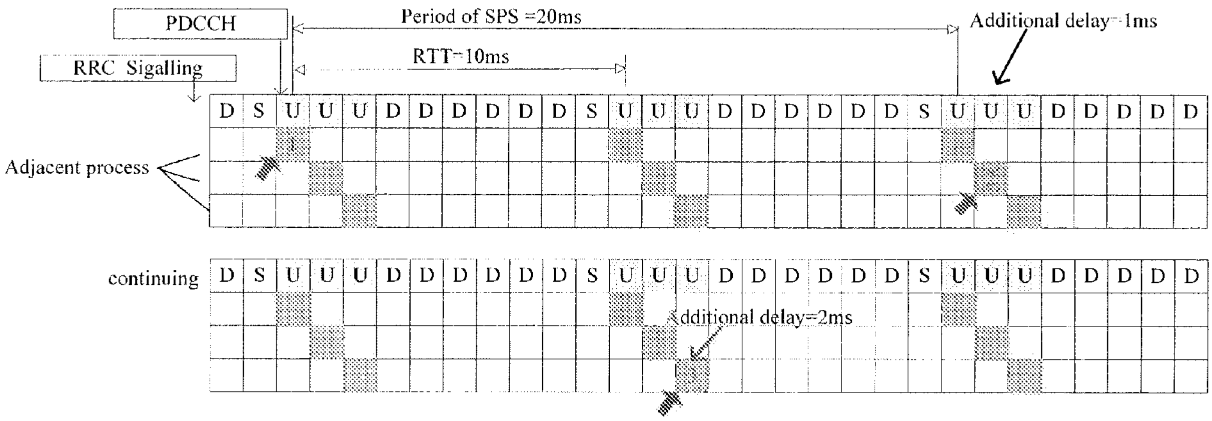
PDCCH
RRC Sigalling
Period of SPS =20ms
RTT=10ms
Additional delay=1ms
D S U U U D D D D D D S U U U D D D D D D S U U U D D D D D
Adjacent process
continuing
D S U U U D D D D D D S U U U D D D D D D S U U U D D D D D
Additional delay=2ms

Fig. 5

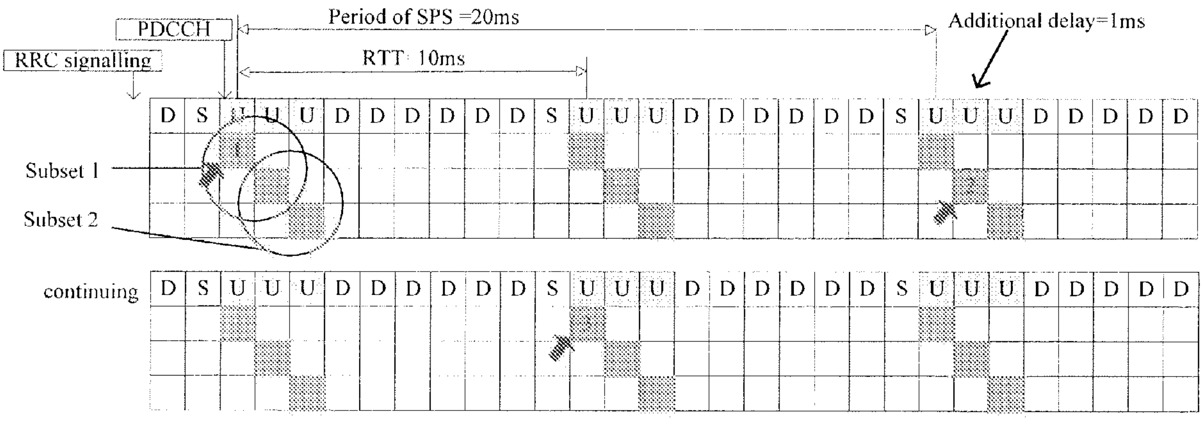
PDCCH
RRC signalling
Period of SPS =20ms
RTT 10ms
Additional delay=1ms
Subset 1
Subset 2
continuing
D S U U U D D D D D D S U U U D D D D D D S U U U D D D D D
D S U U U D D D D D D S U U U D D D D D D S U U U D D D D D

**Fig. 6**

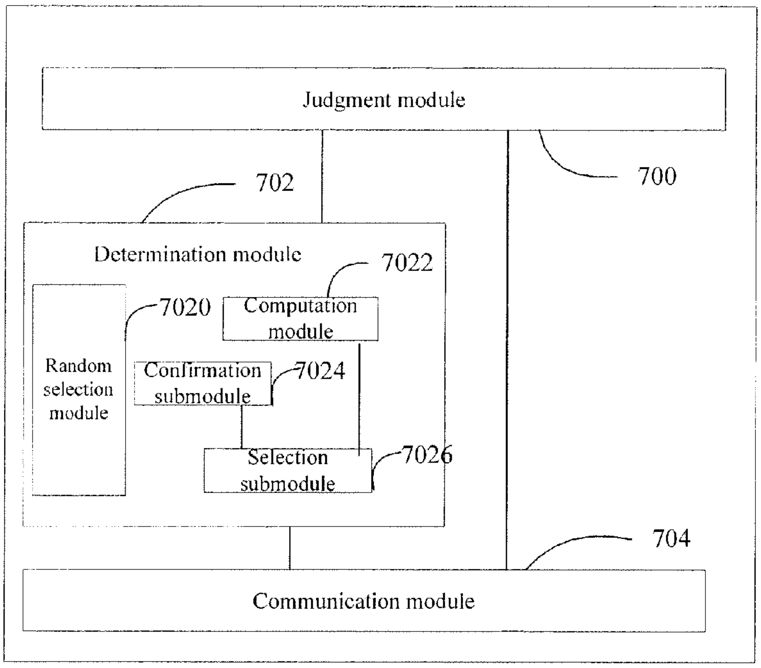
Judgment module
700
702
Determination module
7022
7020
Computation module
Random selection module
Confirmation submodule
7024
Selection submodule
7026
704
Communication module

**Fig. 7**

Europäisches Patentamt
European Patent Office
Office européen des brevets

# EUROPEAN SEARCH REPORT

Application Number
EP 09 16 9896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CATT ET AL: "R2-084841 Multiple patterns for UL SPS" INTERNET CITATION vol. 3GPP TSG RAN WG2 AGENDA ITEM 6.1.1.3, 22 August 2008 (2008-08-22), pages 1-4, XP002554075 Jeju, Korea Retrieved from the Internet: URL:http://www.3gpp.org/ftp/tsg_ran/WG2_RL2/TSGR2_63/Docs/R2-084841.zip> [retrieved on 2008-08-22] * Sections 1, 2.1, 2.2, 3.1 * ----- | 1-18 | INV. H04W72/04 ADD. H04W72/12 |
| Y | CATT: "R2-080121 Collision avoidance in uplink semi-persistent scheduling for TDD" INTERNET CITATION vol. 3GPP TSG RAN WG2 Agenda Item 5.1.1.9, 18 January 2008 (2008-01-18), pages 1-5, XP002554076 Sevilla, Spain Retrieved from the Internet: URL:http://www.3gpp.org/ftp/tsg_ran/WG2_RL2/TSGR2_60bis/Docs/R2-080121.zip> [retrieved on 2008-01-18] * Sections 1, 2.2, 3 * ----- | 1-18 | TECHNICAL FIELDS SEARCHED (IPC) H04W |
| | -/-- | | |

The present search report has been drawn up for all claims

| Place of search | Date of completion of the search | Examiner |
|---|---|---|
| Munich | 17 November 2009 | Dutrieux, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 09 16 9896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | 3GPP ORGANIZATIONAL PARTNERS (ARIB ET AL): "3GPP TS 36.321 V8.2.0 - Evolved Universal Terrestrial Radio Access (E-UTRA) Medium Access Control (MAC) protocol specification (Release 8)" INTERNET CITATION vol. 3rd GENERATION PARTNERSHIP PROJECT, May 2008 (2008-05), pages 1-33, XP002554077 Sophia Antipolis Valbonne - FRANCE Retrieved from the Internet: URL:http://www.3gpp.org/ftp/Specs/archive/36_series/36.321/36321-820.zip> [retrieved on 2008-05-01] * page 18 - page 19 * ----- | 1-18 | |
| A | 3GPP Organizational Partners (ARIB et AL): "3GPP TS 36.300 V8.5.0 - Evolved Universal Terrestrial Radio Access (E-UTRA) and Evolved Universal Terrestrial Radio Access Network (E-UTRAN); Overall description; Stage 2 (Release 8)" INTERNET CITATION vol. 3RD GENERATION PARTNERSHIP PROJECT, May 2008 (2008-05), page 63, XP002554078 Sophia AntipolisValbonne - FRANCE Retrieved from the Internet: URL:http://www.3gpp.org/ftp/Specs/archive/36_series/36.300/36300-850.zip> [retrieved on 2008-05-01] * Section 11.1.2 * ----- | 8-9,15 | TECHNICAL FIELDS SEARCHED (IPC) |

The present search report has been drawn up for all claims

| Place of search | Date of completion of the search | Examiner |
|---|---|---|
| Munich | 17 November 2009 | Dutrieux, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)